# EUROPEAN PATENT SPECIFICATION

(11) **EP 2 672 612 B1**
(45) Date of publication and mention of the grant of the patent: **24.07.2019**
(21) Application number: 12171279.8
(22) Date of filing: 08.06.2012
(51) Int. Cl.: H02K 1/30, H02K 1/27

(54) **Pole shoe arrangement for a rotor of a generator**
Polschuhanordnung für einen Rotor eines Generators
Agencement d'épanouissement polaire pour un rotor de générateur

(43) Date of publication of application: 11.12.2013
(73) Proprietor: Siemens Gamesa Renewable Energy A/S, 7330 Brande (DK)
(72) Inventor: Fischer, Fanny, 01561 Kleinnaundorf (DE); Semmer, Silvio, 7330 Brande (DK); Tourde, Xavier, 7330 Brande (DK); Urda, Adriana Cristina, 5230 Odense M (DK)
(74) Representative: Aspacher, Karl-Georg

(56) References cited:
- EP-A1- 2 169 814
- WO-A1-03/073591
- WO-A1-2007/063370
- US-B1- 6 734 596

## Description

### Field of invention

The present invention relates to the technical field of generators having a rotor which comprises magnets, in particular permanent magnets, and which is rotatable around a stator. In particular, the present invention relates to a pole shoe arrangement for a rotor of a generator. Further, the present invention relates to a rotor and to a generator.

### Art Background

An electric generator is an electromechanical transducer that converts mechanical energy into electrical energy using a magnetic field linkage. A generator comprises a stator and a rotor. The stator is an assembly, which represents the stationary part of a generator. The rotor may represent a part or parts of the generator moving relative to the stator arrangement, in particular rotating relative to the stator arrangement. The rotor thereby may comprise magnets, such as permanent magnets, which rotate relative to one or more coils comprised in the stator. In one form, the rotor rotates around the stator.

In common systems, the magnetized rotor and the wound stator are produced as independent components and then composed together. The magnets are embedded in a cylindrical rotor steel structure for instance by gluing. Topologies of the rotor for flux concentration for electrical machines are commonly used for smaller power electrical machines. However, in common arrangements, magnets and iron pieces are arranged next to each other for providing a flux concentration. However, these topologies are to be arranged before the composition of the rotor and the stator.

WO 03/073591 A1 discloses a synchronous generator which comprises a rotor and a stator. The rotor comprises pole elements which are located adjacent to each other along a circumferential direction of the rotor. Between the pole elements, permanent magnets are installed.

WO 2007/063370 A1 discloses a magnet holder for permanent magnet rotors of rotating machines. A plurality of permanent magnet assemblies are mounted via magnet holders comprising a pair of claws to the rotor body. The claws can elastically pivot about a bridge when the thermal expansions are squeezed together or forced apart.

Therefore, there may be a need for facilitating mounting of permanent magnets to a rotor assembly of an electromechanical transducer whilst providing an improved flux distribution within the rotor.

### Summary of the Invention

This need may be met by the subject matter according to the independent claims. Advantageous embodiments of the present invention are described by the dependent claims.

According to a first aspect of the invention there is provided a pole shoe arrangement for a rotor of a generator, in particular for a direct drive, outer rotor generator concept. The generator comprises a stator and the rotor which is rotatable around the stator. The pole shoe arrangement comprises a first pole shoe element being made of ferromagnetic material, and a second pole shoe element being made of ferromagnetic material, wherein the first pole shoe element and the second pole shoe element are attached to a rotor support structure. The first pole shoe element and the second pole shoe element extend in an axial direction of the rotor and are spaced in relation to each other in a circumferential direction of the rotor in such a manner that a recess is formed for receiving a magnet assembly. Each pole shoe element has a first width in the circumferential direction at a first radial inner position and has a second width in the circumferential direction at a second radial outer position, wherein, in the radial direction, the first width transitions to the second width in a stepwise manner, wherein the second width is smaller than the first width. A portion of each pole shoe element being located at a radially inward end of the rotor is formed as a lamination structure portion, and the rest of the pole shoe elements are in the form of a solid structure.

The term "rotor support structure" in this context may refer to the structure of a rotor to which all necessary elements are attached.

The term "pole shoe element" in this context refers to magnetic elements providing flux distribution of the flux provided by the magnets. The pole shoe elements may be steel rotor bars that may carry the magnets and the magnetic flux. In common systems, a pole shoe is arranged as a separate element between magnets, wherein the pole shoes are attached to the rotor surface with gaps between the pole shoes and the magnets. By using the herein described pole shoe arrangement, an improved distribution of the magnetic field flowing through the rotor may be achieved whilst also providing electrical isolation between adjacent magnets. Poles between the pole shoe elements may be provided by the magnets.

The described pole shoe arrangement is based on the idea that, by using the described arrangement, an improved assembly of the rotor may be achieved as the magnets may be inserted into the rotor after rotor and stator have been assembled. The basis of the described arrangement is to modularize the construction of surface mounted permanent magnet topology rotors, whilst also improving the flux concentration or distribution.

By using the described arrangement, a fully modular rotor surface can be provided, wherein the entire surface of the rotor is made up of separate components. As all components, e.g., pole shoe elements and magnets, are accessible from the outside, maintenance and reparation of the rotor, in particular of failed magnets, may be easier.

According to an embodiment of the invention, the first pole shoe element and the second pole shoe element are fixed to the rotor support structure by bolts. The rotor support structure may comprise different parts to which the pole shoe elements may be fixed. In another embodiment, the first pole shoe element and the second pole shoe element are fixed to the rotor support structure by gluing or bolts or other method of fixation.

According to a further embodiment of the invention, the ferromagnetic material is magnetic steel. The composition of the the magnetic steel may vary as long as the magnetic steel provides ferromagnetic characteristic for carrying the flux of the magnets.

A lamination structure may be used for reducing eddy current losses which may occur in such a rotor. In particular, this portion of the pole shoe elements is made of laminated steel sheets. The rest of the pole shoe elements is in the form of a solid structure. This may provide a good stability of the pole shoe elements and a good distribution of the flux. The lamination may be in axial or circumferential direction, corresponding to the stator.

According to a further embodiment, in a cross-section perpendicular to the axial direction of the rotor, the lamination structure portion has a triangular shape.

By having a triangular shape, the pole shoe elements may be arranged next to each other, wherein the tips of the triangles adjoin each other. When the magnet assembly has a rectangular form, an air gap in the form of a triangle may be achieved between the air gap between rotor and stator, the magnet and the pole shoe elements. This may improve the flux distribution.

According to a further aspect of the invention, there is provided a rotor, in particular a rotor for a generator, for instance a generator of a wind turbine. The rotor comprises a pole shoe arrangement as described above, and a magnet assembly. The magnet assembly is inserted into the recess between the first pole shoe element and the second pole shoe element, wherein the magnet assembly has a shape corresponding to the shape of the recess.

The magnet assembly may have an outer contour which corresponds to the inner contour of the recess, i.e., to the shape of the pole shoe elements. The magnet assembly may provide the poles between the pole shoe elements.

According to an embodiment of the invention, the magnet assembly comprises a plurality of permanent magnets.

The single magnets are fixed together to form the magnet assembly or magnet module. The single magnets can be fixed together using different means, for example glue, shrink fit foil, bandage or the like.

According to a further embodiment of the invention, the magnet assembly comprises a plurality of equally shaped and equally dimensioned permanent magnets, which are attached to each other in a radial direction and a circumferential direction to form a shape corresponding to the shape of the recess.

By using equal dimensions for the magnets, the manufacturing of the magnet assembly can be made easier and cost efficient.

According to a further embodiment of the invention, a plurality of magnet assemblies is inserted into the gap in the axial direction of the rotor, wherein separators are arranged between each of the plurality of magnet assemblies.

In the axial direction, multiple magnet assemblies may be inserted. For example, depending on the axial length of the rotor, this may be between 5 and 20 magnet assemblies. Between the different magnet assemblies, separators may be used as guidance and holding bars to avoid repelling of the magnets against each other. The separators may be made of non-magnetic, insulating material.

The pole shoe elements may comprise guiding and holding steel bars to hold the magnet assemblies and guide them in the axial direction of the rotor when inserted in a radial direction into the rotor or generator. As the magnet assemblies may have the same polarity in the axial direction, they may try to repel each other. The guiding and holding steel bars may keep the magnet assemblies in place attached to the rotor and may also help by guiding the magnet assemblies during the assembly.

According to a further embodiment of the invention, a non-magnetic cover is attached to the magnet assembly.

A cover may provide protection for the magnets and may further provide fixation of the magnets. Further, the cover may provide a fixture for eliminating the vibration in the radial direction due to magnet piece tolerances. The cover may be a non-magnetic steel or aluminum placed at the outside circumference of the magnet assembly. The cover may have a layer of soft or damping material (like foam or rubber) placed between the cover and the magnet assembly. By pushing the cover from the outside circumference in the radial direction, the flexible or soft material may allow the cover to move as far down as needed by the tolerances of the magnets or the magnet assemblies.

The cover may be screwed to the pole shoe elements. This may also help to keep the magnet assembly in place.

Further, the damping material may serve, in addition to mechanical damping, as a sealant to exclude particles, moist or salty air, water, or any other kind of liquids or dirt from entering the generator.

According to a further embodiment of the invention, end plates are arranged at axial ends of the rotor.

The pole shoe elements can be arranged at an angle between the endplates to allow for skewing. The endplates may be made of non-magnetized material to avoid a short circuit of the magnets. The endplates may be used for attaching the pole shoe elements to the rotor.

According to a further aspect of the invention, there is provided a generator comprising a stator, and a rotor as described above, wherein the rotor is rotatable around the stator.

The provided generator is based on the idea that with the above described rotor, magnets may be inserted after the rotor and the stator have been put together. This may be achieved by the arrangement of the pole shoe elements which provide an opening to the outside of the rotor for inserting the magnet assemblies.

According to a further aspect of the invention there is provided a wind turbine for generating electrical power. The provided wind turbine comprises a tower, a wind turbine rotor, which is arranged at a top portion of the tower and which comprises at least one blade, and a generator as described above, wherein the generator is mechanically coupled with the wind turbine rotor.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Figure 1 shows a pole shoe arrangement according to an embodiment of the present invention.
Figure 2 shows a pole shoe element according to an embodiment of the invention.
Figure 3 shows a pole shoe element according to a further embodiment of the invention.
Figure 4 shows a rotor according to an embodiment of the invention.
Figure 5 shows a rotor according to a further embodiment of the invention.
Figure 6 shows a magnet assembly according to an embodiment of the invention.
Figure 7 shows a generator according to an embodiment of the invention.

### Detailed Description

The illustration in the drawing is schematically. It is noted that in different figures, similar or identical elements are provided with the same reference signs.

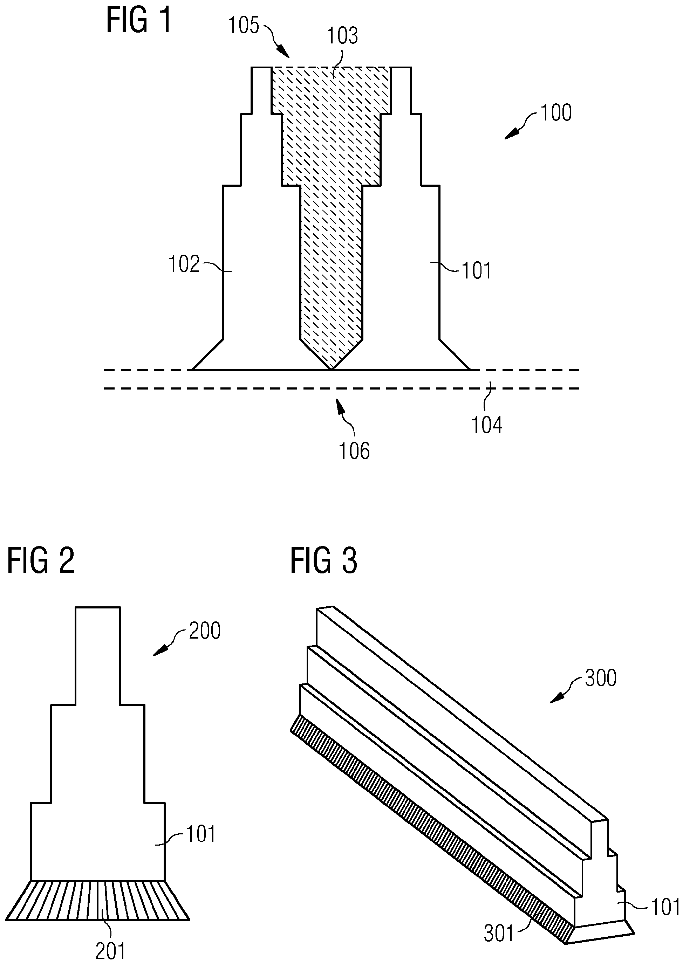

Figure 1 shows a pole shoe arrangement 100. The pole shoe arrangement can be used for a rotor of a generator, the generator comprising a stator and the rotor rotatable around the stator. The pole shoe arrangement comprises a first pole shoe element 101 and a second pole shoe element 102. Both pole shoe elements can be made of a ferromagnetic material, like magnetic steel. The pole shoe elements carry the flux from the magnet assembly.

The pole shoe elements are attached to the rotor, for instance to a rotor support structure. The pole shoe elements extend in an axial direction, as can be seen in Figure 3, where the pole shoe element 300 is shown in an axial view.

The pole shoe elements are spaced in relation to each other in a circumferential direction of the rotor in such a manner that a recess is formed for receiving a magnet assembly 103. The form of the recess corresponds to the form of the magnet assembly.

Each pole shoe element has a first width in the circumferential direction at a first radial inner position and has a second width in the circumferential direction at a second radial outer position. In other words, the pole shoe elements are getting thinner to the radially outward end of the rotor. The pole shoe elements can also have more than two widths. However, in any case, the inner widths are greater than the outer widths. The transitions between the widths are formed in steps.

The greatest width is at a position near the air gap 104 between the rotor and the stator 106 (or magnetic air gap of the generator). The smallest width is at a position near the outside (air) of the rotor.

The greatest width portion of the pole shoe elements 200, i.e., the portion closest to the magnetic air gap of the generator, can be in the form of a triangle 201 as shown in Figure 2. This portion can be made of a lamination structure. This may provide the advantage of reducing eddy current losses. As shown in Figure 2, the laminations can be arranged circumferential. In Figure 3, axial arrangement of the laminations is shown. The arrangement of the laminations should correspond to the arrangement of the stator.

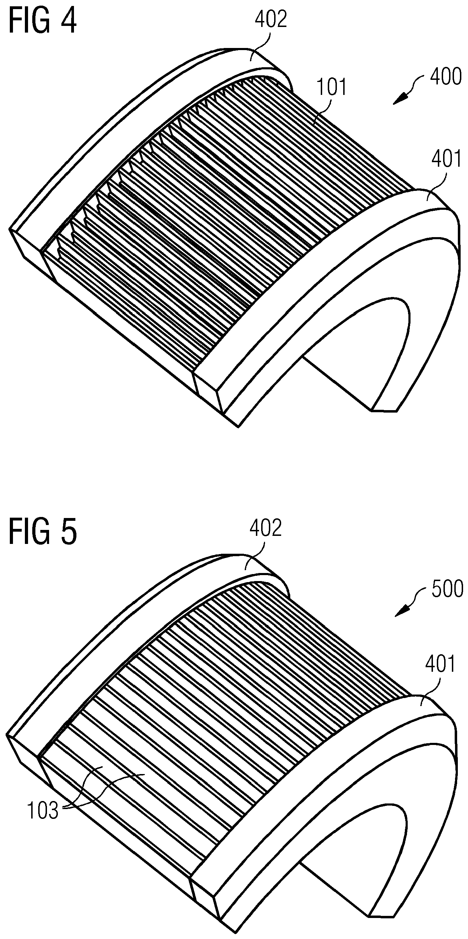

As shown in Figure 4, at the axial ends of the rotor 400, end plates 401, 402 can be arranged, e.g., in the form of a front plate and a back plate. The pole shoe elements 101 can be attached to the rotor by being welded or screwed to the end plates. A plurality of pole shoe elements 101 can be arranged on the rotor structure, each extending between the end plates and being spaced to the next pole shoe element for forming a recess for the magnet assemblies.

As shown in Figure 5, magnet assemblies 103 can be inserted into the recesses provided by the pole shoe elements. The radial outer surface of the rotor 500 is thus covered with magnet assemblies. The magnet assemblies can be covered with a non-magnetic material providing protection.

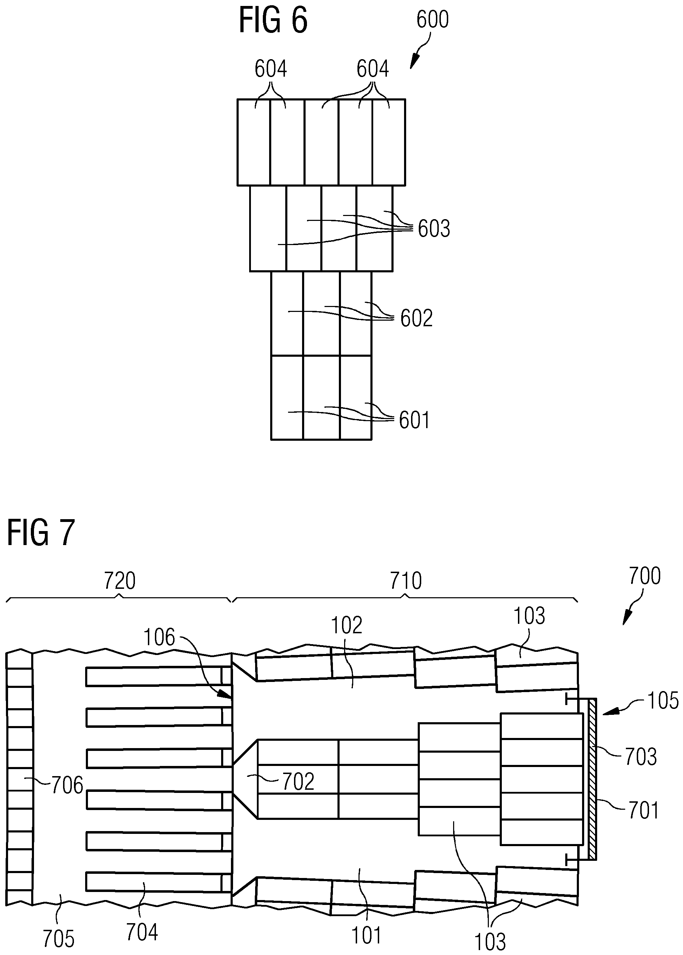

The magnet assemblies 600, as shown in Figure 6, are constructed of a plurality of single permanent magnets 601-604, which form the contour of the recess. Preferably, the single magnet pieces are not larger than 25 cm in edge length.

In the example as shown in Fig. 6, the magnet assembly consists of 15 pieces. The magnet pieces have exactly the same dimensions. This may provide the advantage that the design is modular and the different magnet pieces can be handled easily. The magnet pieces can have different materials. For instance, the pieces 601 being closer to the air gap can have a higher coercivity to resist better to a demagnetization field opposing the magnets in case of a short circuit. The other magnets 602, 603 and 604 can have a lower coercivity value.

Figure 7 illustrates a complete generator assembly 700. The rotor 710 can rotate around the stator 720. The stator is connected to a shaft 706 and comprises a coil arrangement 705, wherein air gaps 704 are formed between the coils.

An air gap 106 is formed between the rotor 710 and the stator 720. Further, an air gap 702 is formed by the pole shoe elements 101, 102 and the magnet assembly 103. On the sides of the pole shoe elements opposing to the magnet assembly, further magnet assemblies 103 can be arranged.

Towards the rotor outside 104, which can be air, a cover 701 can be arranged on top of the magnet assembly. This may provide protection against contamination. When the cover 701 is made of a non-magnetic material, this may also provide protection against short circuits. To reduce vibrations, a damping material 703 may be arranged between the cover 701 and the magnet assembly 103.

The herein described pole shoe and magnet arrangement may provide the following advantages: No back iron path is needed; instead a non-magnetic cover may be used with a damping effect. No front iron path is needed, which results in an air gap between the pole shoes in a circumferential direction. A modular magnet module design may be achieved using the same geometrical dimensions of the magnet pieces. This may also lead to an easy assembly due to the puzzle-like design where all the magnet modules are inserted between two rotor pole shoe elements. The modularity of the design may further allow an assembly from the side (air), which may reduce the transportation cost. Furthermore, the service or maintenance of the rotor is easier because of the easy access to the magnet modules and the pole elements. The modular design also allows inter-exchangeability in case of any faulty magnet module or pole shoe element. As mechanical and electromagnetic structure functionality is combined, optimized use of material and a compact generator may be achieved.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. A pole shoe arrangement (100) for a rotor (400) of a generator, the generator comprising a stator and the rotor rotatable around the stator, the pole shoe arrangement comprising
a first pole shoe element (101) being made of ferromagnetic material, and
a second pole shoe element (102) being made of ferromagnetic material,
wherein the first pole shoe element (101) and the second pole shoe element (102) are attached to a rotor support structure,
wherein the first pole shoe element (101) and the second pole shoe element (102) extend in an axial direction of the rotor and are spaced in relation to each other in a circumferential direction of the rotor in such a manner that a recess is formed for receiving a magnet assembly (103),
wherein each pole shoe element has a first width in the circumferential direction at a first radial inner position and has a second width in the circumferential direction at a second radial outer position,
wherein, in the radial direction, the first width transitions to the second width in a stepwise manner,
wherein the second width is smaller than the first width,
**characterized in that**
a portion of each pole shoe element being located at a radially inward end of the rotor is formed as a lamination structure portion, and
wherein the rest of the pole shoe elements are in the
form of a solid structure.

2. The pole shoe arrangement (100) as set forth in claim 1, wherein the first pole shoe element (101) and the second pole shoe element (102) are fixed to the rotor support structure by bolts.

3. The pole shoe arrangement (100) as set forth in claim 1, wherein the first pole shoe element (101) and the second pole shoe element (102) are fixed to the rotor support structure by gluing.

4. The pole shoe arrangement (100) as set forth in any one of the preceding claims, wherein the ferromagnetic material is magnetic steel.

5. The pole shoe arrangement (100) as set forth in any one of the preceding claims, wherein, in a cross-section perpendicular to the axial direction of the rotor, the lamination structure portion has a triangular shape.

6. A rotor (400), the rotor comprising
a pole shoe arrangement (100) as set forth in any one of the preceding claims, and
a magnet assembly (103),
wherein the magnet assembly (103) is inserted into the recess between the first pole shoe element (101) and the second pole shoe element (102), wherein the magnet assembly has a shape corresponding to the shape of the recess.

7. The rotor (400) as set forth in claim 6, wherein the magnet assembly comprises a plurality of permanent magnets.

8. The rotor (400) as set forth in claim 7, wherein the magnet assembly comprises a plurality of equally shaped and equally dimensioned permanent magnets, which are attached to each other in a radial direction and a circumferential direction to form a shape corresponding to the shape of the recess.

9. The rotor (400) as set forth in any one of the claims 6 to 8, wherein a plurality of magnet assemblies is inserted into the gap in the axial direction of the rotor, wherein separators are arranged between each of the plurality of magnet assemblies.

10. The rotor (400) as set forth in any one of the claims 6 to 9, wherein a non-magnetic cover is attached to the magnet assembly.

11. The rotor (400) as set forth in any one of the claims 6 to 10, wherein end plates are arranged at axial ends of the rotor.

12. A generator comprising
a stator, and
a rotor as set forth in any one of the claims 6 to 11, wherein the rotor is rotatable around the stator.

## Patentansprüche

1. Polschuhanordnung (100) für einen Rotor (400) eines Generators, wobei der Generator einen Stator umfasst und der Rotor um den Stator drehbar ist, wobei die Polschuhanordnung Folgendes umfasst:
ein erstes Polschuhelement (101) aus ferromagnetischem Material und
ein zweites Polschuhelement (102) aus ferromagnetischem Material,
wobei das erste Polschuhelement (101) und das zweite Polschuhelement (102) an einer Rotorträgerkonstruktion befestigt sind,
wobei das erste Polschuhelement (101) und das zweite Polschuhelement (102) in einer axialen Richtung des Rotors verlaufen und in Umfangsrichtung des Rotors so voneinander beabstandet sind, dass eine Vertiefung zum Aufnehmen einer Magnetbaugruppe (103) entsteht,
wobei jedes Polschuhelement in Umfangsrichtung an einer ersten, radial innenliegenden Position eine erste Breite und in Umfangsrichtung an einer zweiten, radial außenliegenden Position eine zweite Breite aufweist,
wobei die erste Breite in radialer Richtung schrittweise in die zweite Breite übergeht,
wobei die zweite Breite kleiner ist als die erste Breite,
**dadurch gekennzeichnet, dass**
ein Abschnitt jedes Polschuhelements, der sich an einem radial innenliegenden Ende des Rotors befindet, als Lamellierungskonstruktionsabschnitt ausgebildet ist und
wobei der Rest der Polschuhelemente in Form einer massiven Konstruktion vorliegt.

2. Polschuhanordnung (100) nach Anspruch 1, wobei das erste Polschuhelement (101) und das zweite Polschuhelement (102) mit Schrauben an der Rotorträgerkonstruktion fixiert sind.

3. Polschuhanordnung (100) nach Anspruch 1, wobei das erste Polschuhelement (101) und das zweite Polschuhelement (102) durch Verkleben an der Rotorträgerkonstruktion fixiert sind.

4. Polschuhanordnung (100) nach einem der vorhergehenden Ansprüche, wobei es sich bei dem ferromagnetischen Material um Magnetstahl handelt.

5. Polschuhanordnung (100) nach einem der vorhergehenden Ansprüche, wobei der Lamellierungskonstruktionsabschnitt in einem senkrecht zur axialen Richtung des Rotors verlaufenden Querschnitt eine dreieckige Form aufweist.

6. Rotor (400), der Folgendes umfasst:
eine Polschuhanordnung (100) nach einem der vorhergehenden Ansprüche und
eine Magnetbaugruppe (103),
wobei die Magnetbaugruppe (103) in die Vertiefung zwischen dem ersten Polschuhelement (101) und dem zweiten Polschuhelement (102) eingeführt ist, wobei die Magnetbaugruppe eine Form aufweist, die der Form der Vertiefung entspricht.

7. Rotor (400) nach Anspruch 6, wobei die Magnetbaugruppe mehrere Permanentmagneten umfasst.

8. Rotor (400) nach Anspruch 7, wobei die Magnetbaugruppe mehrere gleich geformte und dimensionierte Permanentmagneten umfasst, die in radialer Richtung und Umfangsrichtung so aneinander befestigt sind, dass sie eine Form bilden, die der Form der Vertiefung entspricht.

9. Rotor (400) nach einem der Ansprüche 6 bis 8, wobei mehrere Magnetbaugruppen in den Spalt in axialer Richtung des Rotors eingeführt sind, wobei zwischen jeder der mehreren Magnetbaugruppen Trennelemente angeordnet sind.

10. Rotor (400) nach einem der Ansprüche 6 bis 9, wobei eine nichtmagnetische Abdeckung an der Magnetbaugruppe befestigt ist.

11. Rotor (400) nach einem der Ansprüche 6 bis 10, wobei an axialen Enden des Rotors Stirnplatten angeordnet sind.

12. Generator, der Folgendes umfasst:
einen Stator und
einen Rotor nach einem der Ansprüche 6 bis 11, wobei der Rotor um den Stator drehbar ist.

## Revendications

1. Agencement d'épanouissement polaire (100) destiné à un rotor (400) d'un générateur, le générateur comprenant un stator et le rotor pouvant tourner autour du stator, l'agencement d'épanouissement polaire comprenant :
un premier élément d'épanouissement polaire (101) composé d'un matériau ferromagnétique, et
un second élément d'épanouissement polaire (102) composé d'un matériau ferromagnétique,
dans lequel le premier élément d'épanouissement polaire (101) et le second élément d'épanouissement polaire (102) sont fixés à une structure de support de rotor,
dans lequel le premier élément d'épanouissement polaire (101) et le second élément d'épanouissement polaire (102) s'étendent dans une direction axiale du rotor et sont espacés l'un par rapport à l'autre dans une direction circonférentielle du rotor, de telle manière qu'un renfoncement est formé pour recevoir un ensemble d'aimants (103),
dans lequel chaque élément d'épanouissement polaire présente une première largeur dans la direction circonférentielle au niveau d'une première position intérieure radiale et possède une seconde largeur dans la direction circonférentielle au niveau d'une seconde position extérieure radiale,
dans lequel, dans la direction radiale, la première largeur passe à la seconde largeur de manière progressive,
dans lequel la seconde largeur est inférieure à la première largeur,
**caractérisé en ce que**
une partie de chaque élément d'épanouissement polaire étant située au niveau d'une extrémité radialement vers l'intérieur du rotor est formée en tant que partie de structure de stratification, et
dans lequel le reste des éléments d'épanouissement polaires est sous la forme d'une structure solide.

2. Agencement d'épanouissement polaire (100) selon la revendication 1, dans lequel le premier élément d'épanouissement polaire (101) et le second élément d'épanouissement polaire (102) sont fixés à la structure de support de rotor par des boulons.

3. Agencement d'épanouissement polaire (100) selon la revendication 1, dans lequel le premier élément d'épanouissement polaire (101) et le second élément d'épanouissement polaire (102) sont fixés à la structure de support de rotor par de la glue.

4. Agencement d'épanouissement polaire (100) selon l'une quelconque des revendications précédentes, dans lequel le matériau ferromagnétique est en acier magnétique.

5. Agencement d'épanouissement polaire (100) selon l'une quelconque des revendications précédentes, dans lequel, dans une section transversale perpendiculaire à la direction axiale du rotor, la partie de structure de stratification présente une forme triangulaire.

6. Rotor (400), le rotor comprenant :
un agencement d'épanouissement polaire (100) selon l'une quelconque des revendications précédentes, et
un ensemble d'aimants (103),
dans lequel l'ensemble d'aimants (103) est inséré dans le renfoncement entre le premier élément d'épanouissement polaire (101) et le second élément d'épanouissement polaire (102), dans lequel l'ensemble d'aimants présente une forme correspondant à la forme du renfoncement.

7. Rotor (400) selon la revendication 6, dans lequel l'ensemble d'aimants comprend une pluralité d'aimants permanents.

8. Rotor (400) selon la revendication 7, dans lequel l'ensemble d'aimants comprend une pluralité d'aimants permanents de même forme et de dimensions égales, qui sont fixés les uns aux autres dans une direction radiale et une direction circonférentielle pour former une forme correspondant à la forme du renfoncement.

9. Rotor (400) selon l'une quelconque des revendications 6 à 8, dans lequel une pluralité d'ensembles d'aimants est insérée dans l'espace dans la direction axiale du rotor, dans lequel des séparateurs sont agencés entre chacun de la pluralité d'ensembles d'aimants.

10. Rotor (400) selon l'une quelconque des revendications 6 à 9, dans lequel un couvercle non magnétique est fixé à l'ensemble d'aimants.

11. Rotor (400) selon l'une quelconque des revendications 6 à 10, dans lequel des plaques d'extrémité sont fixées au niveau des extrémités axiales du rotor.

12. Générateur comprenant :
un stator, et
un rotor comme défini selon l'une quelconque des revendications 6 à 11, dans lequel le rotor peut être tourné autour du stator.
